(19) Europäisches Patentamt
European Patent Office
Office européen des brevets

(11) **EP 4 540 561 B1**

(12) **FASCICULE DE BREVET EUROPEEN**

(45) Date de publication et mention
de la délivrance du brevet:
**11.03.2026  Bulletin 2026/11**

(21) Numéro de dépôt: **23733353.9**

(22) Date de dépôt: **20.06.2023**

(51) Classification Internationale des Brevets (IPC):
**F25B 49/02** *(2006.01)*

(52) Classification Coopérative des Brevets (CPC):
**F25B 49/02; B60H 1/00278; B60H 1/323;**
B60H 2001/00307; F25B 5/02; F25B 2400/0403;
F25B 2400/0411; F25B 2600/0253; F25B 2600/2513

(86) Numéro de dépôt international:
**PCT/EP2023/066554**

(87) Numéro de publication internationale:
**WO 2023/247486 (28.12.2023 Gazette 2023/52)**

(54) **PROCÉDÉ DE CONTROLE D'UN SYSTÈME DE CONDITIONNEMENT THERMIQUE**

VERFAHREN ZUR STEUERUNG EINER THERMISCHEN KLIMAANLAGE

METHOD FOR CONTROLLING A THERMAL CONDITIONING SYSTEM

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité:  **20.06.2022  FR 2205989**

(43) Date de publication de la demande:
**23.04.2025  Bulletin 2025/17**

(73) Titulaire: **VALEO SYSTEMES THERMIQUES**
**78320 Le Mesnil-Saint-Denis (FR)**

(72) Inventeurs:
• **NICOLAS, Bertrand**
**78320 Le Mesnil-Saint-Denis (FR)**
• **YAHIA, Mohamed**
**78320 Le Mesnil-Saint-Denis (FR)**

(74) Mandataire: **Valeo Powertrain Systems**
**Service Propriété Intellectuelle**
**Immeuble le Delta**
**14, avenue des Béguines**
**95892 Cergy Pontoise (FR)**

(56) Documents cités:
**EP-A1- 1 103 296    US-A1- 2017 065 931**

## Description

## Domaine technique

La présente invention se rapporte au domaine des systèmes de conditionnement thermique. De tels systèmes de conditionnement thermique peuvent notamment équiper un véhicule automobile. Ces systèmes permettent de réaliser une régulation thermique de différents organes du véhicule, comme l'habitacle ou une batterie de stockage d'énergie électrique, lorsque la chaine de traction du véhicule est électrique. Les échanges de chaleur sont gérés principalement par la compression et la détente d'un fluide réfrigérant au sein de plusieurs échangeurs de chaleur.

## Technique antérieure

Les systèmes de conditionnement thermiques font couramment appel à un circuit de fluide réfrigérant et un circuit de liquide caloporteur échangeant de la chaleur avec le fluide réfrigérant. De tels systèmes sont ainsi appelés indirects. Un compresseur assure le passage à haute pression du fluide réfrigérant.

Il est connu de disposer en série dans le circuit de fluide réfrigérant un premier échangeur de chaleur permettant d'assurer le chauffage d'un flux d'air à destination de l'habitacle du véhicule, un deuxième échangeur de chaleur permettant de chauffer un élément de la chaine de traction du véhicule, tel une batterie de stockage d'énergie électrique, et un troisième échangeur de chaleur permettant de refroidir cet élément de la chaine de traction du véhicule. Suivant les modes de fonctionnement, il est ainsi possible de fournir de la chaleur à l'élément de la chaine de traction du véhicule afin de le chauffer, ou de récupérer de la chaleur depuis cet élément afin de la transférer par exemple à un flux d'air alimentant l'habitacle, afin de chauffer celui-ci.

Lors de la mise en route du véhicule par température ambiante fraiche, il est souhaitable d'assurer une montée en température rapide de l'habitacle, afin d'assurer un bon confort thermique aux occupants. Pour cela, il est connu de doter le circuit de fluide réfrigérant d'une branche de dérivation permettant au fluide réfrigérant sortant du compresseur de rejoindre le troisième échangeur sans passer par le premier échangeur ni par le deuxième échangeur. Le débit de fluide réfrigérant à haute pression en sortie du compresseur est divisé en un débit circulant dans la boucle principale et un débit circulant dans la branche de dérivation. Après avoir traversé le troisième échangeur de chaleur, le débit total de fluide réfrigérant rejoint l'entrée du compresseur. Ce cycle thermodynamique particulier permet d'augmenter le débit de fluide réfrigérant circulant dans le circuit, et ainsi d'augmenter la quantité d'énergie reçue par le fluide réfrigérant lors de sa compression. La montée en température du fluide réfrigérant est ainsi accélérée.

Ce mode de fonctionnement permet s'assurer une montée en température de l'habitacle accélérée, mais pose généralement des difficultés de contrôle du fonctionnement du compresseur ainsi que des débits respectifs circulant dans la boucle principale et dans la branche de dérivation.

Il existe ainsi un besoin de disposer d'un procédé de contrôle optimisé d'un tel système de conditionnement thermique.

US 2017/065931 A1 divulgue un système de conditionnement thermique comprenant un circuit de fluide réfrigérant comprenant: une boucle principale avec un compresseur, un premier échangeur de chaleur, un premier détendeur, un deuxième échangeur de chaleur; une branche de dérivation comprenant un deuxième détendeur et contournant le premier échangeur et le premier détendeur; et une unité électronique de contrôle configurée pour contrôler le deuxième détendeur pour que la pression d'aspiration du compresseur soit égale à la consigne de pression d'aspiration et pour contrôler le premier détendeur pour que le fluide réfrigérant en entrée du compresseur soit à l'état de vapeur surchauffée.

## Résumé

A cette fin, la présente invention propose un procédé de contrôle d'un système de conditionnement thermique, le système de conditionnement thermique comprenant:

- un circuit de liquide caloporteur configuré pour faire circuler un liquide caloporteur,
- un circuit de fluide réfrigérant comportant :

    -- une boucle principale comprenant successivement selon un sens d'écoulement du fluide réfrigérant:

        --- un compresseur configuré pour être entrainé par un moteur électrique, le compresseur étant configuré pour faire passer le fluide réfrigérant d'une pression d'aspiration à une pression de refoulement,
        --- un premier échangeur de chaleur configuré pour fournir une puissance thermique à un fluide caloporteur,
        --- un premier détendeur,
        --- un deuxième échangeur de chaleur agencé conjointement sur le circuit de fluide réfrigérant et sur le circuit de liquide caloporteur de façon à recevoir une puissance thermique (Pw2) du liquide caloporteur,

    -- une première branche de dérivation permettant au fluide réfrigérant en sortie du compresseur de rejoindre le deuxième échangeur en contournant le premier échangeur et le premier détendeur, la première branche de dérivation comprenant un deuxième détendeur,

le procédé de contrôle comportant les étapes :

(i) Recevoir une consigne de puissance thermique à fournir au moins au fluide caloporteur au niveau du premier échangeur,

(ii) Déterminer une consigne de puissance électrique à fournir au moteur électrique du compresseur en fonction de la consigne reçue de puissance thermique à fournir et en fonction de la puissance thermique reçue par le deuxième échangeur,

(iii) Déterminer une consigne de pression de refoulement en fonction de la consigne de puissance électrique déterminée et en fonction d'une pression maximale de refoulement,

(iv) Déterminer une consigne de pression d'aspiration en fonction de la consigne de puissance électrique déterminée et en fonction de la consigne de pression de refoulement déterminée,

(v) Contrôler le régime de rotation du moteur électrique du compresseur de façon à ce que la puissance électrique fournie au compresseur soit égale à la consigne déterminée,

(vi) Contrôler une section de passage du deuxième détendeur pour que la pression d'aspiration du compresseur soit égale à la consigne de pression d'aspiration déterminée, et

(vii) Contrôler une section de passage du premier détendeur pour que le fluide réfrigérant en entrée du compresseur soit à l'état de vapeur surchauffée.

Cette structure de contrôle permet de contrôler de manière robuste la quantité de fluide réfrigérant circulant dans le circuit de fluide réfrigérant, ainsi que la répartition de ce débit de fluide réfrigérant entre le débit circulant dans la boucle principale et traversant le premier échangeur, et le débit circulant dans la première branche de dérivation et rejoignant le débit de la branche principale en aval du premier détendeur.

Les caractéristiques listées dans les paragraphes suivant peuvent être mises en œuvre indépendamment les unes des autres ou selon toutes les combinaisons techniquement possibles :
Selon un exemple de mise en œuvre, le système de conditionnement thermique est un système de condition thermique pour véhicule automobile.

Selon un mode de réalisation, à l'étape (ii), la consigne de puissance électrique à fournir au moteur électrique du compresseur est égale à la consigne reçue de puissance thermique à fournir moins la puissance thermique reçue par le deuxième échangeur.

Selon un mode de réalisation, à l'étape (iv), la consigne de pression d'aspiration est déterminée en fonction de la consigne de puissance électrique, en fonction de la consigne de pression de refoulement déterminée et en fonction d'un régime de rotation maximal autorisé du compresseur.

Le régime de rotation maximal autorisé peut dépendre des conditions de fonctionnement. En particulier, le régime de rotation maximal autorisé peut dépendre d'une vitesse d'avancement du véhicule. Ainsi le régime maximal autorisé peut être plus élevé lorsque le véhicule roule que lorsque le véhicule est à l'arrêt.

La pression maximale de refoulement peut être une valeur constante, par exemple 27 Bar.

La pression maximale de refoulement peut correspondre à la pression maximale admissible pour garantir la fiabilité à long terme du compresseur. L'utilisation d'une valeur constante permet de simplifier le procédé de contrôle.

Selon un mode de mise en œuvre du procédé, la consigne de puissance électrique à fournir au moteur électrique du compresseur est par exemple égale à la consigne de puissance totale de chauffage reçue.

Selon une variante, la consigne de puissance électrique à fournir au moteur électrique du compresseur peut être égale à la consigne de puissance totale de chauffage reçue divisée par le rendement adiabatique du compresseur.

La consigne de puissance électrique est ainsi calculée de manière plus précise.

Selon un mode de réalisation du procédé, le contrôle de la section de passage du premier détendeur est réalisé par un régulateur proportionnel, intégral.

De même, le contrôle de la section de passage du deuxième détendeur peut être réalisé par un régulateur proportionnel, intégral.

Ce type de régulateur assure une régulation robuste tout en restant simple à programmer et à mettre au point.

Selon un mode de mise en œuvre du procédé, le contrôle de la section de passage du premier détendeur et le contrôle de la section de passage du deuxième détendeur sont configurés pour que :

- une augmentation de la section de passage du premier détendeur entraine une diminution de la section de passage du deuxième détendeur, et
- une augmentation de la section de passage du deuxième détendeur entraine une augmentation de la section de passage du premier détendeur.

Le couplage entre les corrections apportées à la section de passage du premier détendeur et les corrections apportées à la section de passage du deuxième détendeur permet d'améliorer la stabilité du contrôle.

Selon un mode de réalisation du procédé, dans lequel la boucle principale du circuit de fluide réfrigérant comprend un troisième détendeur agencé en aval du compresseur et en amont du premier échangeur de chaleur, le procédé comprend l'étape :
(viii) Contrôler une section de passage du fluide réfrigérant dans le troisième détendeur de façon à ce que la pression de refoulement soit égale à la consigne de pression de refoulement déterminée.

Pour cela, l'étape (viii) comprend une sous-étape : Déterminer la pression de refoulement ($Pr\_d$).

Assurer une détente partielle du fluide réfrigérant dans le troisième détendeur force le compresseur à comprimer le fluide réfrigérant jusqu'à une valeur plus élevée que la pression de condensation dans le premier échangeur. La puissance thermique reçue par le fluide réfrigérant est ainsi augmentée, ce qui permet d'accélérer la montée en température du système de conditionnement thermique.

Selon un mode de réalisation, le procédé comprend les étapes :

(vii1) Déterminer une surchauffe du fluide réfrigérant en entrée du compresseur,
(vii2) Contrôler une section de passage du premier détendeur de façon à ce que la surchauffe du fluide réfrigérant en entrée du compresseur soit égale à une valeur de consigne.

La consigne de surchauffe en entrée du compresseur est choisie de façon à garantir que le réfrigérant aspiré par le compresseur soit sous forme entièrement gazeuse. La fiabilité du compresseur est ainsi garantie.

La valeur de consigne de la surchauffe du fluide réfrigérant en entrée du compresseur est par exemple comprise entre 5°C et 15°C.

Selon un mode de réalisation, le procédé comprend les étapes :

(vii1') Déterminer une surchauffe du fluide réfrigérant en sortie du compresseur,
(vii2') Contrôler une section de passage du premier détendeur de façon à ce que la surchauffe du fluide réfrigérant en sortie du compresseur soit égale à une valeur de consigne.

Contrôler la consigne de surchauffe en sortie du compresseur est une autre manière de garantir que le réfrigérant aspiré par le compresseur soit sous forme sensiblement entièrement gazeuse. La fiabilité du compresseur est ainsi garantie.

La valeur de consigne de la surchauffe du fluide réfrigérant en sortie du compresseur est comprise entre 15°C et 35°C.

Selon un mode de réalisation du procédé, dans lequel la boucle principale du système de conditionnement thermique comprend, en aval du premier échangeur de chaleur et en amont du premier dispositif de détente, un troisième échangeur de chaleur agencé conjointement sur le circuit de fluide réfrigérant et sur le circuit de liquide caloporteur de façon à permettre un échange de chaleur entre le fluide réfrigérant et le liquide caloporteur, le troisième échangeur de chaleur étant configuré pour fournir une puissance thermique au liquide caloporteur, et dans lequel à l'étape (i), la consigne de puissance thermique à fournir est une puissance thermique totale, somme de la puissance thermique à fournir au fluide caloporteur au niveau du premier échangeur et de la puissance thermique à fournir au liquide caloporteur au niveau du troisième échangeur.

Selon un exemple de mise en œuvre du procédé, le fluide caloporteur est un flux d'air intérieur à un habitacle d'un véhicule automobile.

Selon un autre exemple de mise en œuvre du procédé, le fluide caloporteur est un liquide caloporteur configuré pour circuler dans un cinquième échangeur de chaleur configuré pour échanger de la chaleur avec un flux d'air intérieur à l'habitacle du véhicule.

Selon un mode de réalisation du procédé, le deuxième échangeur de chaleur est couplé thermiquement avec un élément d'une chaine de traction du véhicule, par l'intermédiaire du liquide caloporteur du circuit de liquide caloporteur.

Le deuxième échangeur de chaleur permet ainsi d'absorber de la chaleur de l'élément de la chaine de traction du véhicule, afin de maintenir sa température dans une limite acceptable ou afin de transférer la chaleur absorbée à un autre organe.

Selon un mode de réalisation du procédé, le troisième échangeur de chaleur est couplé thermiquement à l'élément d'une chaine de traction du véhicule, par l'intermédiaire du liquide caloporteur du circuit de liquide caloporteur.

Le troisième échangeur de chaleur permet ainsi de fournir une puissance thermique à l'élément de la chaine de traction du véhicule, c'est-à-dire de chauffer cet élément afin d'augmenter sa température.

L'élément de la chaine de traction électrique comprend par exemple un moteur électrique de traction du véhicule.

En variante ou de manière complémentaire, l'élément de la chaine de traction électrique comprend un module électronique de pilotage d'un moteur électrique de traction du véhicule.

En variante encore, ou de manière complémentaire, l'élément de la chaine de traction électrique comprend une batterie de stockage d'énergie électrique.

L'invention se rapporte également à un système de conditionnement thermique comprenant:

- un circuit de liquide caloporteur configuré pour faire circuler un liquide caloporteur,
- un circuit de fluide réfrigérant comportant :

-- une boucle principale comprenant successivement selon un sens d'écoulement du fluide réfrigérant:

--- un compresseur configuré pour être entraîné par un moteur électrique, le compresseur étant configuré pour faire passer le fluide réfrigérant d'une pression d'aspiration à une pression de refoulement,
--- un premier échangeur de chaleur configuré pour fournir une puissance thermique à un fluide caloporteur,
--- un premier détendeur,

--- un deuxième échangeur de chaleur agencé conjointement sur le circuit de fluide réfrigérant et sur le circuit de liquide caloporteur de façon à recevoir une puissance thermique du liquide caloporteur,

-- une première branche de dérivation permettant au fluide réfrigérant en sortie du compresseur de rejoindre le deuxième échangeur en contournant le premier échangeur et le premier détendeur, la première branche de dérivation comprenant un deuxième détendeur,

- Une unité électronique de contrôle configurée pour mettre en œuvre le procédé de contrôle décrit précédemment.

Selon un mode de réalisation du système de conditionnement thermique, le circuit de fluide réfrigérant comprend une deuxième branche de dérivation disposée en parallèle du premier détendeur et du deuxième échangeur de chaleur, la deuxième branche de dérivation comprenant un quatrième détendeur et un quatrième échangeur de chaleur.

Par exemple, le quatrième échangeur de chaleur est configuré pour échanger de la chaleur avec un flux d'air intérieur à l'habitacle du véhicule.

Selon un aspect du système de régulation thermique, la boucle principale de fluide réfrigérant comprend un dispositif d'accumulation de fluide réfrigérant disposé en aval du premier échangeur et en amont du premier détendeur.

Dans un mode de réalisation, la boucle principale de fluide réfrigérant comprend un dispositif d'accumulation de fluide réfrigérant disposé en aval du premier échangeur et en amont du premier détendeur. Dans un mode de réalisation dans lequel la boucle principale de fluide réfrigérant comprend le premier échangeur et le troisième échangeur, le dispositif d'accumulation de fluide réfrigérant est disposé en aval du troisième échangeur et en amont du premier détendeur.

Selon un mode de réalisation du système de conditionnement thermique, la boucle principale de fluide réfrigérant comprend un échangeur interne configuré pour permettre un échange de chaleur entre le fluide réfrigérant à haute pression en aval du troisième échangeur de chaleur et en amont du premier détendeur, et le fluide réfrigérant à basse pression en aval du deuxième échangeur et en amont du compresseur.

Selon un aspect du système de conditionnement thermique, celui-ci comprend une première branche de dérivation reliant fluidiquement un premier point de raccordement disposé sur la boucle principale en aval du compresseur et en amont du premier échangeur à un deuxième point de raccordement disposé sur la boucle principale en aval du premier détendeur et en amont du deuxième échangeur, la première branche de dérivation comportant un deuxième dispositif de détente.

Selon un mode de réalisation, le système de conditionnement thermique comprend une deuxième branche de dérivation reliant fluidiquement un troisième point de raccordement disposé sur la boucle principale en aval du troisième échangeur et en amont du premier détendeur à un quatrième point de raccordement disposé sur la boucle principale en aval du deuxième échangeur et en amont du compresseur, la deuxième branche de dérivation comportant un quatrième dispositif de détente disposé en amont d'un quatrième échangeur de chaleur.

**Brève description des dessins**

D'autres caractéristiques, détails et avantages apparaîtront à la lecture de la description détaillée ci-après, et à l'analyse des dessins annexés, sur lesquels :

[Fig. 1] est une vue schématique d'un système de conditionnement thermique selon un premier mode de réalisation, dans lequel le procédé de contrôle selon l'invention est mis en œuvre,

[Fig. 2] est une vue schématique d'un système de conditionnement thermique selon un deuxième mode de réalisation, dans lequel le procédé de contrôle selon l'invention est mis en œuvre,

[Fig. 3] est une vue schématique d'une variante du système de conditionnement thermique de la figure 2,

[Fig. 4] est une vue schématique d'une autre variante du système de conditionnement thermique de la figure 2,

[Fig. 5] est un diagramme thermodynamique schématisant l'état du fluide réfrigérant lorsque de la mise en œuvre du procédé de contrôle,

[Fig. 6] est une courbe illustrant le fonctionnement du procédé de contrôle,

[Fig. 7] est un schéma-bloc illustrant différentes étapes du procédé selon l'invention.

**Description des modes de réalisation**

Afin de faciliter la lecture des figures, les différents éléments ne sont pas nécessairement représentés à l'échelle. Sur ces figures, les éléments identiques portent les mêmes références. Certains éléments ou paramètres peuvent être indexés, c'est-à-dire désignés par exemple par premier élément ou deuxième élément, ou encore premier paramètre et second paramètre, etc. Cette indexation a pour but de différencier des éléments ou paramètres similaires, mais non identiques. Cette indexation n'implique pas une priorité d'un élément, ou paramètre par rapport à un autre et on peut interchanger les dénominations.

Dans la description qui suit, le terme " un premier élément en amont d'un deuxième élément " signifie que le premier élément est placé avant le deuxième élément par rapport au sens de circulation, ou de parcours, d'un fluide. De manière analogue, le terme " un premier élément en aval d'un deuxième élément " signifie que le premier élément est placé après le deuxième élément par rapport au sens de circulation, ou de parcours, du fluide considéré. Dans le cas du circuit de fluide réfrigérant, le terme « un premier élément est en amont d'un deuxième élément » signifie que le fluide réfrigérant parcourt successivement le premier élément, puis le deuxième élément, sans passer par le dispositif de compression. Autrement dit, le fluide réfrigérant sort du dispositif de compression, traverse éventuellement ou plusieurs éléments, puis traverse le premier élément, puis le deuxième élément, puis regagne le dispositif de compression, éventuellement après avoir traversé d'autres éléments.

Le terme « un deuxième élément est placé entre un premier élément et un troisième élément » signifie que le plus court trajet pour passer du premier élément au troisième élément passe par le deuxième élément. Quand il est précisé qu'un sous-système comporte un élément donné, cela n'exclut pas la présence d'autres éléments dans ce sous-système.

Dans le système de conditionnement thermique 100 décrit, une unité électronique de contrôle 50 reçoit des informations de différents capteurs, non représentés, mesurant notamment les caractéristiques physiques du fluide réfrigérant en divers points du circuit. L'unité électronique de contrôle reçoit également des consignes émises par les occupants du véhicule, comme par exemple la température souhaitée à l'intérieur de l'habitacle. L'unité électronique de contrôle met en œuvre des lois de contrôle permettant le pilotage des différents actionneurs, afin d'assurer le contrôle du système de conditionnement thermique 100 de façon à assurer les consignes reçues. L'unité électronique de contrôle 50 met notamment en œuvre le procédé selon l'invention.

Le dispositif de compression 7 peut être un compresseur électrique, c'est-à-dire un compresseur dont les pièces mobiles sont entrainées par un moteur électrique 6. Le dispositif de compression 7 comporte un côté aspiration du fluide réfrigérant à basse pression, encore appelé entrée 7a du dispositif de compression, et un côté refoulement du fluide réfrigérant à haute pression, encore appelé sortie 7b du dispositif de compression 7. Les pièces mobiles internes du compresseur 7 font passer le fluide réfrigérant d'une basse pression, ou pression d'aspiration $Pr\_s$, côté entrée 7a, à une haute pression, ou pression de refoulement $Pr\_d$, côté sortie 7b. Après détente dans un ou plusieurs dispositifs de détente, le fluide réfrigérant revient à l'entrée 7a du compresseur 7 et recommence un nouveau cycle thermodynamique.

Le circuit de fluide réfrigérant 10 forme un circuit fermé dans lequel peut circuler le fluide réfrigérant. Le circuit de fluide réfrigérant 10 est étanche lorsque celui çi est dans un état nominal de fonctionnement, c'est-à-dire sans défaut ou fuite. Chaque point de raccordement du circuit 10 permet au fluide réfrigérant de passer dans l'une ou l'autre des portions de circuit se rejoignant à ce point de raccordement. La répartition du fluide réfrigérant entre les portions de circuit se rejoignant en un point de raccordement se fait en jouant sur l'ouverture ou la fermeture de vannes d'arrêt, clapets anti-retour ou dispositif de détente compris sur chacune des branches. Autrement dit, chaque point de raccordement est un moyen de redirection du fluide réfrigérant arrivant à ce point de raccordement. Des vannes d'arrêt et les clapets antiretour permettent ainsi de diriger sélectivement le fluide réfrigérant dans les différentes branches du circuit de réfrigérant, afin d'assurer différents modes de fonctionnement, comme il sera décrit ultérieurement.

Le fluide réfrigérant utilisé par le circuit de fluide réfrigérant 1 est ici un fluide chimique tel que le R1234yf. D'autres fluides réfrigérants peuvent aussi être employés, comme par exemple le R134a, le R290 ou le R744.

On entend par flux d'air intérieur Fi un flux d'air à destination de l'habitacle du véhicule automobile. Ce flux d'air intérieur peut circuler dans une installation de chauffage, ventilation et/ou climatisation, souvent désignée par le terme Anglais « HVAC » signifiant « Heating, Ventilating and Air Conditioning ». Cette installation n'a pas été représentée sur les différentes figures. Un groupe moto-ventilateur, non représenté, peut être activé afin d'augmenter si nécessaire le débit du flux d'air intérieur Fi.

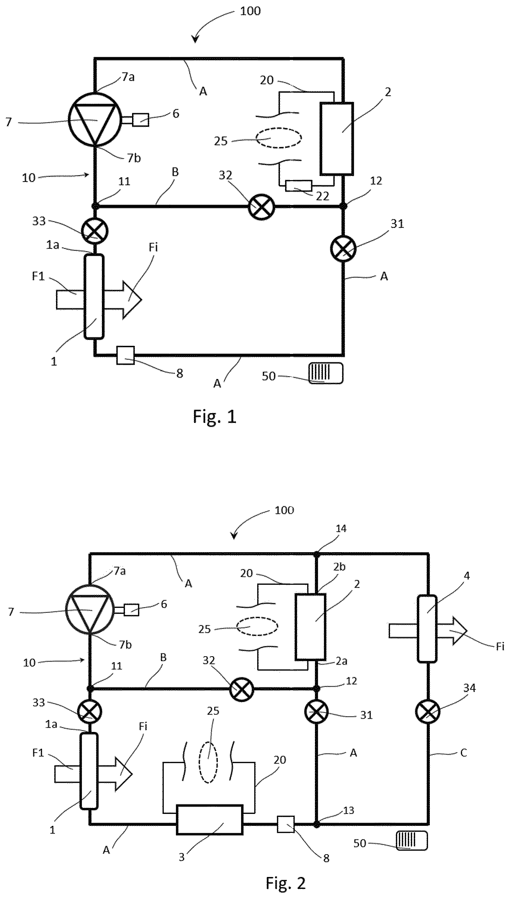

On a représenté sur la figure 1 un système de conditionnement thermique 100 comprenant:

- un circuit 20 de liquide caloporteur configuré pour faire circuler un liquide caloporteur,
- un circuit de fluide réfrigérant 10 comportant :

    -- une boucle principale A comprenant successivement selon un sens d'écoulement du fluide réfrigérant:

        --- un compresseur 7 configuré pour être entrainé par un moteur électrique 6, le compresseur 7 étant configuré pour faire passer le fluide réfrigérant d'une pression d'aspiration $Pr\_s$ à une pression de refoulement $Pr\_d$,
        --- un premier échangeur 1 de chaleur configuré pour fournir une puissance thermique Pw1 à un fluide caloporteur F1,
        --- un premier détendeur 31,
        --- un deuxième échangeur de chaleur 2 agencé conjointement sur le circuit de fluide réfrigérant 10 et sur le circuit de liquide caloporteur 20 de façon à recevoir une puissance thermique Pw2 du liquide caloporteur,

-- une première branche de dérivation B permettant au fluide réfrigérant en sortie du compresseur 7 de rejoindre le deuxième échangeur 2 en contournant le premier échangeur 1 et le premier détendeur 31, la première branche de dérivation B comprenant un deuxième détendeur 32,

- Une unité électronique de contrôle 50 configurée pour mettre en œuvre le procédé de contrôle qui va être décrit en détail ci-dessous.

Le premier échangeur de chaleur 1 est configuré pour échanger de la chaleur avec le fluide caloporteur F1. Le premier échangeur de chaleur 1 peut fonctionner en condenseur. La chaleur de condensation du fluide réfrigérant est transférée au fluide caloporteur F1. Une puissance thermique Pw1 est ainsi fournie au fluide caloporteur F1.

Le deuxième échangeur 2 de chaleur est un échangeur bifluide. Autrement dit, le deuxième échangeur 2 de chaleur comprend un premier compartiment parcouru par le fluide réfrigérant et un deuxième compartiment parcouru par le liquide caloporteur. Les deux compartiments sont étanches et peuvent réaliser un échange thermique. L'échangeur bifluide comprend une entrée et une sortie de fluide réfrigérant, ainsi qu'une entrée et une sortie de liquide caloporteur. Au sein du deuxième échangeur 2, le fluide réfrigérant peut ainsi recevoir du liquide caloporteur une puissance thermique Pw2. Un élément chauffant 22, par exemple un élément chauffant électrique, peut être disposé sur le circuit de liquide caloporteur 20 afin de chauffer selon certaines conditions de fonctionnement le liquide caloporteur. Une puissance thermique Pw2 est ainsi transférée du liquide caloporteur vers le fluide réfrigérant au sein du deuxième échangeur 2. L'élément chauffant 22 est optionnel.

Chaque détendeur du système de conditionnement thermique 100 est un dispositif de détente du fluide réfrigérant. Chaque détendeur est configuré pour faire varier une section de passage du fluide réfrigérant. Chaque détendeur comprend une entrée de fluide réfrigérant et une sortie de fluide réfrigérant. La sortie et l'entrée sont reliées fluidiquement par un canal. Un obturateur mobile permet de contrôler la section de passage du canal, c'est-à-dire la surface de passage offerte au fluide réfrigérant. Le détendeur est par exemple un détendeur électronique, c'est-à-dire que l'obturateur mobile est actionné par un moteur électrique commandé par un module électronique de contrôle. La position de l'obturateur mobile peut être contrôlée en boucle fermée, c'est-à-dire que la position de l'obturateur mobile est mesurée et ajustée en temps réel de façon à atteindre une consigne de position. La section de passage du fluide réfrigérant peut être ajustée de manière continue entre une position de fermeture et une position d'ouverture maximale. Le module électronique de contrôle de chaque détendeur peut être intégré au détendeur correspondant. Selon une variante, l'unité électronique de contrôle 50 peut aussi assurer la commande et le contrôle de chaque détendeur.

Le premier détendeur 31 est configuré pour faire varier la section de passage de fluide réfrigérant dans la portion de circuit située en aval du premier échangeur 1 et en amont du deuxième point de raccordement 12. Le deuxième détendeur 32 est configuré pour faire varier une section de passage du fluide réfrigérant dans la première branche de dérivation B.

Selon un exemple de mise en œuvre, le système de conditionnement thermique 100 est un système de condition thermique pour véhicule automobile.

Le fluide caloporteur F1 est, dans le mode de réalisation de la figure 1, un flux d'air intérieur Fi à un habitacle d'un véhicule automobile. Le premier échangeur 1 de chaleur est disposé dans l'installation de chauffage, ventilation et/ou climatisation.

Le deuxième échangeur de chaleur 2 est ici couplé thermiquement avec un élément 25 d'une chaine de traction du véhicule. Le couplage thermique est réalisé par l'intermédiaire du liquide caloporteur du circuit de liquide caloporteur 20. Pour cela, le liquide caloporteur circulant dans le circuit 20 de liquide caloporteur réalise un échange thermique avec l'élément 25 de la chaine de traction du véhicule.

Le deuxième échangeur de chaleur 2 permet ainsi d'absorber de la chaleur de l'élément 25 de la chaine de traction du véhicule. La chaleur dissipée par le fonctionnement de l'élément 25 est transférée au liquide caloporteur du circuit 20. Suivant les conditions de fonctionnement, la température de l'élément 25 peut être maintenue dans une limite acceptable, ou la chaleur absorbée peut être transférée à un autre organe dans le but de chauffer cet autre organe.

L'élément 25 de la chaine de traction électrique comprend par exemple un moteur électrique de traction du véhicule. En variante, ou de manière complémentaire, l'élément 25 de la chaine de traction électrique comprend une batterie de stockage d'énergie électrique. En variante encore ou de manière complémentaire, l'élément 25 de la chaine de traction électrique comprend un module électronique de pilotage d'un moteur électrique de traction du véhicule.

La première branche de dérivation B relie fluidiquement un premier point de raccordement 11 disposé sur la boucle principale A en aval du compresseur 7 et en amont du premier échangeur 1 à un deuxième point de raccordement 12 disposé sur la boucle principale A en aval du premier détendeur 31 et en amont du deuxième échangeur 2. On entend ainsi que la première branche de dérivation B établit une communication fluidique entre le premier point de raccordement 11 et le deuxième point de raccordement 12. La première branche de dérivation B comporte un deuxième dispositif de détente 32.

La boucle principale A de fluide réfrigérant comprend un dispositif d'accumulation 8 de fluide réfrigérant disposé en aval du premier échangeur 1 et en amont du premier détendeur 31. Le dispositif d'accumulation 8 de fluide réfrigérant est une bouteille déshydratante.

La présente invention propose un procédé de contrôle d'un système de conditionnement thermique 100, le système de conditionnement thermique 100 comprenant :

- un circuit 20 de liquide caloporteur configuré pour faire circuler un liquide caloporteur,
- un circuit de fluide réfrigérant 10 comportant :

  -- une boucle principale A comprenant successivement selon un sens d'écoulement du fluide réfrigérant:

   --- un compresseur 7 configuré pour être entrainé par un moteur électrique 6, le compresseur 7 étant configuré pour faire passer le fluide réfrigérant d'une pression d'aspiration Pr_s à une pression de refoulement Pr_d,
   --- un premier échangeur 1 de chaleur configuré pour fournir une puissance thermique Pw1 à un fluide caloporteur F1,
   --- un premier détendeur 31,
   --- un deuxième échangeur 2 de chaleur agencé conjointement sur le circuit de fluide réfrigérant 10 et sur le circuit de liquide caloporteur 20 de façon à permettre un échange de chaleur entre le fluide réfrigérant et le liquide caloporteur,

  -- une première branche de dérivation B permettant au fluide réfrigérant en sortie du compresseur 7 de rejoindre le deuxième échangeur 2 en contournant le premier échangeur 1 et le premier détendeur 31, la première branche de dérivation B comprenant un deuxième détendeur 32,

le procédé de contrôle comportant les étapes :

   (i) Recevoir une consigne de puissance thermique C_Pw à fournir au moins au fluide caloporteur F1 au niveau du premier échangeur 1,
   (ii) Déterminer une consigne de puissance électrique C_Pw_el à fournir au moteur électrique 6 du compresseur 7 en fonction de la consigne reçue de puissance thermique à fournir C_Pw et de la puissance thermique Pw2 reçue par le deuxième échangeur 2,
   (iii) Déterminer une consigne de pression de refoulement C_Pr_d en fonction de la consigne de puissance électrique C_Pw_el déterminée et en fonction d'une pression maximale de refoulement Pr_d_max,
   (iv) Déterminer une consigne de pression d'aspiration C_Pr_s en fonction de la consigne de puissance électrique C_Pw_el déterminée, et en fonction de la consigne de pression de refoulement C_Pr_d déterminée,
   (v) Contrôler le régime de rotation N du moteur électrique 6 du compresseur 7 de façon à ce que la puissance électrique Pw_el fournie au compresseur 7 soit égale à la consigne C_Pw_el déterminée,
   (vi) Contrôler une section de passage du deuxième détendeur 32 pour que la pression d'aspiration Ps du compresseur 7 soit égale à la consigne de pression d'aspiration C_Pr_s déterminée, et
   (vii) Contrôler une section de passage du premier détendeur 31 pour que le fluide réfrigérant en entrée du compresseur 7 soit à l'état de vapeur surchauffée.

Cette structure de contrôle permet de contrôler de manière robuste la quantité de fluide réfrigérant circulant dans le circuit de fluide réfrigérant, ainsi que la répartition de ce débit de fluide réfrigérant entre le débit circulant dans la boucle principale et traversant le premier échangeur, et le débit circulant dans la première branche de dérivation et rejoignant le débit de la branche principale en aval du premier détendeur.

A l'étape (ii), la consigne de puissance électrique C_Pw_el à fournir au moteur électrique 6 du compresseur 7 est égale à la consigne reçue de puissance thermique à fournir C_Pw moins la puissance thermique Pw2 reçue par le deuxième échangeur 2. Soit :

$$C\_Pw\_el = C\_Pw - Pw2$$

A l'étape (iv), la consigne de pression d'aspiration C_Pr_s est déterminée en fonction de la consigne de puissance électrique C_Pw_el, en fonction de la consigne de pression de refoulement C_Pr_d déterminée et en fonction d'un régime de rotation maximal autorisé du compresseur 7.

Le régime de rotation maximal autorisé dépend d'une vitesse d'avancement du véhicule. Ainsi le régime maximal autorisé peut être plus élevé lorsque le véhicule roule que lorsque le véhicule est à l'arrêt, car le bruit de fond est plus élevé lorsque le véhicule roule. Le régime de rotation maximal autorisé peut par exemple être cartographié en fonction de la vitesse du véhicule, c'est-à-dire que la valeur du régime de rotation maximal autorisé est lu dans une table à une entrée, l'entrée étant la vitesse du véhicule.

La pression maximale de refoulement Pr_d_Max peut être une valeur constante, par exemple 27 Bar.

La pression maximale de refoulement Pr_d_Max peut correspondre à la pression maximale admissible pour garantir la fiabilité à long terme du compresseur 7. L'utilisation d'une valeur constante permet de simplifier le procédé de contrôle.

Selon une variante, la pression maximale de refoulement Pr_d_Max peut être une valeur tabulée, par exemple une valeur tabulée en fonction d'une vitesse d'avancement du véhicule. On entend par valeur tabulée que la valeur de la pression maximale de refoulement peut être lue dans une table, encore appelée cartographie, associant différentes valeurs de sortie en fonction de la valeur d'entrée de la table.

La pression maximale de refoulement Pr_d_Max peut ainsi dépendre des conditions de fonctionnement. Par exemple, la valeur de pression maximale de refoulement Pr_d_Max peut dépendre de la vitesse d'avancement du véhicule. Ainsi, la pression maximale fournie par le compresseur 7 peut être limitée lorsque le véhicule est à l'arrêt, afin de limiter le bruit généré qui peut être particulièrement dérangeant en l'absence de bruits de roulement du véhicule.

Selon un mode de mise en œuvre du procédé, la consigne de puissance électrique C_Pw_el à fournir au moteur électrique 6 du compresseur 7 est par exemple égale à la consigne de puissance totale de chauffage reçue. Autrement dit, le rendement du compresseur 7 est supposé idéal.

Selon une variante, la consigne de puissance électrique C_Pw_el à fournir au moteur électrique 6 du compresseur 7 peut être égale à la consigne de puissance totale de chauffage reçue divisée par le rendement adiabatique du compresseur 7. Dans ce cas, la consigne de puissance électrique est ainsi calculée de manière plus précise, puisque le rendement n'est plus supposé idéal. Le rendement peut être caractérisé dans différentes conditions de fonctionnement et par exemple cartographié.

Le contrôle de la section de passage du premier détendeur 31 est par exemple réalisé par un régulateur proportionnel, intégral. De même, le contrôle de la section de passage du deuxième détendeur 32 peut être réalisé par un régulateur proportionnel, intégral. Ce type de régulateur assure une régulation robuste tout en restant simple à programmer et à mettre au point.

Selon un mode de mise en œuvre du procédé, le contrôle de la section de passage du premier détendeur 31 et le contrôle de la section de passage du deuxième détendeur 32 sont configurés pour que :

- une augmentation de la section de passage du premier détendeur 31 entraine une diminution de la section de passage du deuxième détendeur 32, et
- une augmentation de la section de passage du deuxième détendeur 32 entraine une augmentation de la section de passage du premier détendeur 31.

Le couplage entre les corrections apportées à la section de passage du premier détendeur 31 et les corrections apportées à la section de passage du deuxième détendeur 32 permet d'améliorer la stabilité du contrôle. Le gain associé à la diminution de la section de passage du deuxième détendeur 32 est par exemple égal à la moitié du gain associé à l'augmentation de la section de passage du premier détendeur 31. Ainsi, lorsque le contrôleur ouvre le premier détendeur 31 d'une certaine quantité, il ferme conjointement le deuxième détendeur 32 d'une valeur égale à la moitié de cette quantité.

Selon l'exemple ici décrit, la boucle principale A du circuit de fluide réfrigérant 10 comprend un troisième détendeur 33 agencé en aval du compresseur 7 et en amont du premier échangeur de chaleur 1, le procédé comprend l'étape :

(viii) Contrôler une section de passage du fluide réfrigérant dans le troisième détendeur 33 de façon à ce que la pression de refoulement Pr_d soit égale à la consigne de pression de refoulement C_Pr_d déterminée.

L'étape (viii) comprend ainsi une sous-étape : Déterminer la pression de refoulement Pr_d.

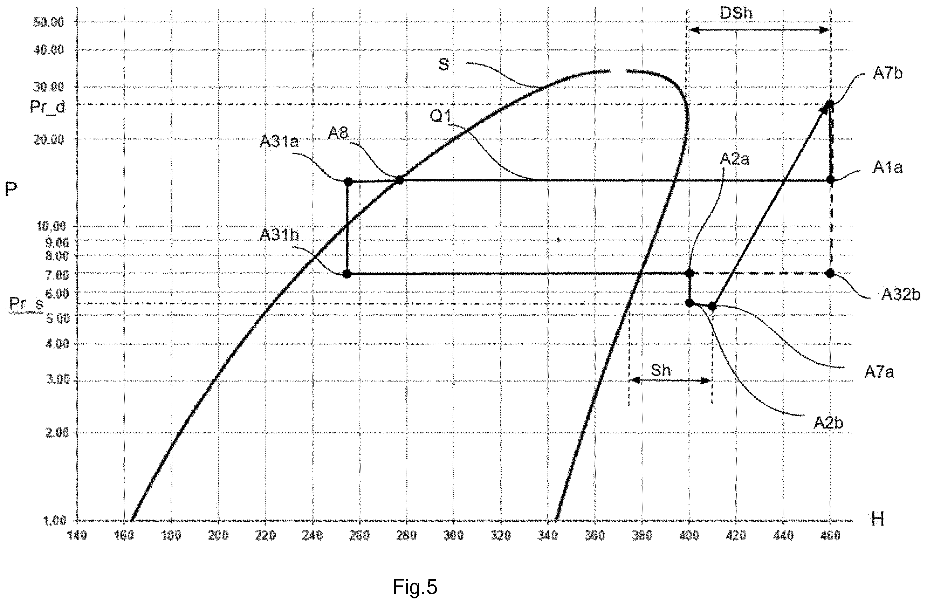

La figure 5 illustre l'état thermodynamique du fluide réfrigérant lors du cycle thermodynamique décrit. La valeur sur l'axe des abscisses est l'enthalpie du fluide réfrigérant. La valeur sur l'axe des ordonnées est la pression du fluide réfrigérant, sur une échelle logarithmique. La courbe S est la courbe de saturation caractéristique du fluide réfrigérant employé. La région du diagramme comprise entre la courbe de saturation S et l'axe des abscisses correspond au domaine diphasique du fluide réfrigérant.

Le point A7a représente l'état du fluide réfrigérant en entrée du compresseur 7. La pression du fluide réfrigérant y est égale à la pression d'aspiration Pr_s. Le point A7b représente l'état du fluide réfrigérant en sortie du compresseur 7. La pression y est égale à la pression de refoulement Pr_d. Le point A1a représente l'état du fluide réfrigérant à l'entrée 1a du premier échangeur 1. Le troisième détendeur 33 réalise une détente partielle du fluide réfrigérant, de sorte que la pression du fluide réfrigérant dans le premier échangeur 1 est inférieure à la pression de refoulement Pr_d du compresseur 7.

Assurer une détente partielle du fluide réfrigérant dans le troisième détendeur 33 force le compresseur 7 à comprimer le fluide réfrigérant jusqu'à une valeur plus élevée que la pression de condensation dans le premier échangeur 1. La puissance thermique reçue par le fluide réfrigérant lors de sa compression est ainsi augmentée. La montée en température du système de conditionnement thermique 100 est ainsi accélérée. De plus, le fait d'utiliser une pression de refoulement la plus élevée possible permet de diminuer le régime de rotation du compresseur 7 et ainsi de diminuer le niveau sonore de fonctionnement.

Le débit de fluide réfrigérant à haute pression en sortie du compresseur 7 est divisé entre un premier débit qui circule dans la boucle principale A et traverse le premier échangeur 1, et un deuxième débit qui circule dans la première branche de dérivation B, la division en deux débits étant réalisée au niveau du premier point de raccordement 11. Le fluide réfrigérant circulant dans la boucle principale A et partiellement détendu par le troisième détendeur 33 se condense dans le premier échangeur 1 en cédant de la chaleur au fluide caloporteur F1. Le signe Q1 indique la quantité de chaleur transférée, et le point A8 caractérise l'état du fluide réfrigérant en sortie du dispositif d'accumulation 8. Le fluide réfrigérant sortant du premier échangeur 1 est ensuite détendu au niveau du premier détendeur 31. La point A31a caractérise l'état du fluide réfrigérant en entrée du premier détendeur 31 et le point A31b l'état en sortie du premier détendeur 31, c'est-à-dire après la détente. En ce point, le fluide réfrigérant est diphasique, en étant majoritairement sous forme liquide.

Le débit circulant dans la première branche de dérivation B subit une détente au niveau du deuxième détendeur 32. Le point A32b représente l'état thermodynamique du fluide réfrigérant en sortie du deuxième détendeur 32. En ce point du cycle, le fluide réfrigérant est à l'état de vapeur surchauffée. Ce débit de vapeur surchauffée circulant dans la première branche de dérivation B est mélangé au débit de fluide réfrigérant diphasique circulant dans la boucle principale A au niveau du deuxième point de raccordement 12, et rejoint l'entrée 2a du deuxième échangeur 2. La point A2a illustre l'état du point de mélange. Le débit de vapeur surchauffé est contrôlé de façon à ce que le mélange obtenu soit sous forme entièrement gazeuse, c'est-à-dire sous forme de vapeur surchauffée. La fiabilité du compresseur 7 est ainsi assurée, puisque le compresseur 7 ne risque pas de recevoir de réfrigérant à l'état liquide. Le point A2b représente l'état du fluide réfrigérant en sortie du deuxième échangeur 2. L'échange de chaleur est négligeable au niveau du deuxième échangeur 2. Sur la figure 5, la perte de charge générée par le deuxième échangeur 2 a été exagérée pour améliorer la lisibilité de la figure. Le fluide réfrigérant sortant du deuxième échangeur 2 rejoint l'entrée du compresseur 7, caractérisée par le point A7a. Le cycle thermodynamique est ainsi bouclé.

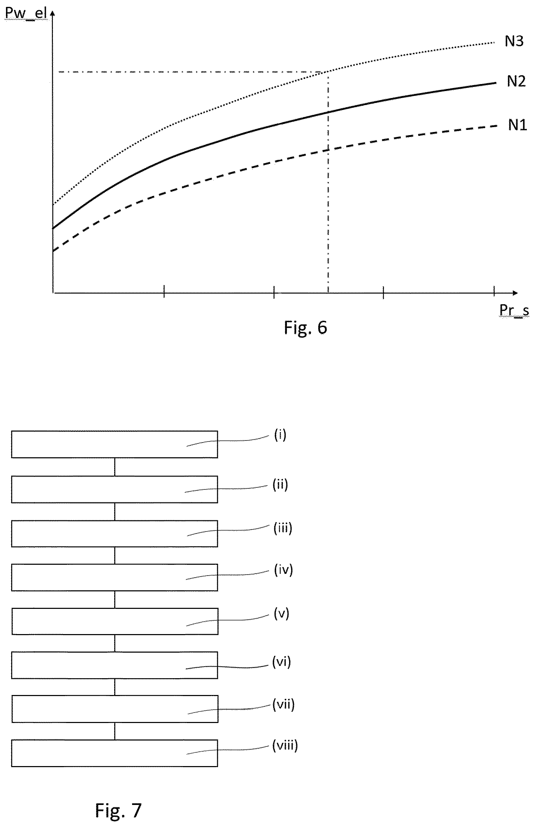

La figure 6 illustre la relation entre la pression d'aspiration Pr_s à l'entrée du compresseur et la puissance électrique Pw_el fournie au compresseur, pour une pression de refoulement Pr_d fixe donnée, par exemple 25 Bar. La courbe N1 correspond à un régime de rotation N du compresseur qui est constant, ici égal à 5000 tr/min. La courbe N2 correspond à un régime supérieur à N1, ici 6000 tr/min et la courbe N3 correspond à un régime constant supérieur à N2, ici 7000 tr/min. A régime de rotation constant, la puissance électrique absorbée par le compresseur est une fonction croissante de la pression d'aspiration Pr_s. Pour une pression d'aspiration donnée, la puissance électrique absorbée par le moteur électrique 6 pour entrainer le compresseur 7 augmente lorsque le régime de rotation augmente. Un tel faisceau de courbes est déterminé pour l'ensemble de la plage de régimes de rotation du compresseur 7, pour l'ensemble de la plage de pressions d'aspiration admissibles et l'ensemble de la plage de pressions de refoulement admissibles. Le faisceau de courbes permet au procédé de contrôle de déterminer la pression d'aspiration, la pression de refoulement et le régime de rotation permettant d'atteindre la consigne de puissance électrique absorbée par le compresseur, et de là d'atteindre la consigne de puissance thermique à dissiper.

Selon un mode de réalisation, le procédé comprend les étapes :

(vii1) Déterminer une surchauffe Sh du fluide réfrigérant en entrée du compresseur 7,
(vii2) Contrôler une section de passage du premier détendeur 31 de façon à ce que la surchauffe Sh du fluide réfrigérant en entrée du compresseur 7 soit égale à une valeur de consigne C_Sh.

La consigne C_Sh de surchauffe en entrée du compresseur 7 est choisie de façon à garantir que le réfrigérant aspiré par le compresseur 7 soit sous forme entièrement gazeuse, afin de garantir la fiabilité du compresseur 7. Le contrôle de la section de passage du deuxième détendeur 32 permet de contrôler le débit de vapeur surchauffée circulant dans la première branche de dérivation B et donc de contrôler la composition du mélange illustré par le point A2a.

La valeur de consigne C_Sh de la surchauffe du fluide réfrigérant en entrée du compresseur 7 est par exemple comprise entre 5°C et 15°C.

Par définition, la surchauffe en entrée du compresseur 7 est égale à la température du fluide réfrigérant en entrée du compresseur 7 moins la valeur de la température de condensation du fluide réfrigérant correspondant à la pression du fluide réfrigérant en entrée du compresseur 7, c'est-à-dire la pression d'aspiration Pr_s. La température du fluide réfrigérant est par exemple mesurée par un capteur de température dont l'élément sensible est au contact du fluide réfrigérant. De même, la pression du fluide réfrigérant est par exemple mesurée par un capteur de pression dont l'élément sensible est au contact du fluide réfrigérant.

Selon un autre mode de réalisation, le procédé comprend les étapes :

(vii1') Déterminer une surchauffe Dsh du fluide réfrigérant en sortie du compresseur 7,
(vii2') Contrôler une section de passage du premier détendeur 31 de façon à ce que la surchauffe du fluide réfrigérant en sortie du compresseur 7 soit égale à une valeur de consigne C_Dsh.

Contrôler la consigne C_Dsh de surchauffe en sortie du compresseur 7 est une autre manière de garantir que le réfrigérant aspiré par le compresseur 7 soit sous forme entièrement gazeuse, de manière à garantir la fiabilité du compresseur 7.

La valeur de consigne C_Dsh de la surchauffe du fluide réfrigérant en sortie du compresseur 7 est comprise entre 15°C et 35°C.

La surchauffe Dsh en sortie du compresseur 7 est égale à la température mesurée du fluide réfrigérant en sortie du compresseur 7 moins la valeur de la température de condensation du fluide réfrigérant correspondant à la pression du fluide réfrigérant en sortie du compresseur 7, c'est-à-dire la pression de refoulement Pr_d.

La figure 2 illustre un deuxième mode de réalisation du système de conditionnement thermique 100, dans lequel le procédé de contrôle est mis en œuvre. Dans ce deuxième mode de réalisation, la boucle principale A du système de conditionnement thermique 100 comprend, en aval du premier échangeur 1 de chaleur et en amont du premier dispositif de détente 31, un troisième échangeur de chaleur 3 agencé conjointement sur le circuit de fluide réfrigérant 10 et sur le circuit 20 de liquide caloporteur de façon à permettre un échange de chaleur entre le fluide réfrigérant et le liquide caloporteur. Le troisième échangeur 3 de chaleur est configuré pour fournir une puissance thermique Pw3 au liquide caloporteur.

A l'étape (i) du procédé de contrôle, la consigne de puissance thermique Pw à fournir est une puissance thermique totale Pw_tot, somme de la puissance thermique Pw1 à fournir au fluide caloporteur F1 au niveau du premier échangeur 1 et de la puissance thermique Pw3 à fournir au liquide caloporteur au niveau du troisième échangeur 3.

Alors que dans le premier mode de réalisation, le fluide réfrigérant fournit une puissance thermique seulement au premier fluide caloporteur F1 au niveau du premier échangeur 1, dans le deuxième mode de réalisation le fluide réfrigérant fournit une puissance thermique également au liquide caloporteur du circuit 20, au niveau du troisième échangeur 3. La consigne de puissance thermique à fournir Pw correspond à la puissance totale à fournir, c'est-à-dire la puissance thermique fournie par le premier échangeur 1 à laquelle s'ajoute la puissance thermique fournie par le troisième échangeur 3.

Le troisième échangeur 3 de chaleur est un échangeur bifluide. Sa construction peut être analogue à celle du deuxième échangeur 2. Ces échangeurs sont par exemple des échangeurs à plaques.

Autrement dit, dans ce deuxième mode de réalisation, la boucle principale A comprend, en série et dans cet ordre, le compresseur 7, le premier point de raccordement 11, le troisième détendeur 33, le premier échangeur 1, le troisième échangeur 3, le dispositif d'accumulation 8, le premier détenteur 31, le deuxième point de raccordement 12, le deuxième échangeur 2, et la portion de circuit s'étendant entre la sortie 2b du deuxième échangeur 2 et l'entrée 7a du compresseur 7. La condensation du fluide réfrigérant à haute pression a lieu en partie dans le premier échangeur 1 et en partie dans le deuxième échangeur 2. Le premier fluide caloporteur F1 peut ainsi être chauffé au niveau du premier échangeur 1 et le liquide caloporteur du circuit 20 peut être chauffé au niveau du troisième échangeur 3. La puissance thermique totale à fournir Pw, est répartie entre la puissance thermique Pw1 fournie par le premier échangeur 1 au premier fluide caloporteur F1 et la puissance thermique Pw3 fournie par le troisième échangeur 3 au liquide caloporteur circulant dans le circuit 20 de liquide caloporteur. La répartition entre la puissance thermique Pw1 et la puissance thermique Pw3 peut être réalisée en jouant sur des paramètres de contrôle qui ne seront pas détaillés..

Dans ce mode de réalisation, la première branche de dérivation B permet au fluide réfrigérant en sortie du compresseur 7 de rejoindre le deuxième échangeur 2 en contournant le premier échangeur 1, le troisième échangeur 3 et le premier détendeur 31. En effet, la première branche de dérivation B relie un point disposé en amont du troisième détendeur 33 à un point disposé en aval du premier détendeur 31.

Dans ce mode de réalisation, la boucle principale A de fluide réfrigérant comprend un dispositif d'accumulation 8 de fluide réfrigérant disposé en aval du troisième échangeur 3 et en amont du premier détendeur 31. Autrement dit, la bouteille déshydratante 8 est disposée entre le troisième échangeur 3 et le premier détendeur 31.

Le troisième échangeur de chaleur 3 est couplé thermiquement à l'élément 25 d'une chaine de traction du véhicule, par l'intermédiaire du liquide caloporteur du circuit de liquide caloporteur 20.

Le troisième échangeur de chaleur 3 permet ainsi de fournir une puissance thermique à l'élément 25 de la chaine de traction du véhicule, c'est-à-dire de chauffer cet élément 25. Le deuxième échangeur 2 permet lui de recevoir une puissance thermique de l'élément 25, afin de le refroidir ou d'effectuer une récupération d'énergie. Le circuit de liquide caloporteur 20 n'a pas été détaillé, et est représenté par des traits interrompus au niveau du troisième échangeur 3 et au niveau du deuxième échangeur 2. Pour simplifier la représentation et éviter des croisements entre les lignes des différents circuits, le circuit 20 est représenté en deux parties distinctes.

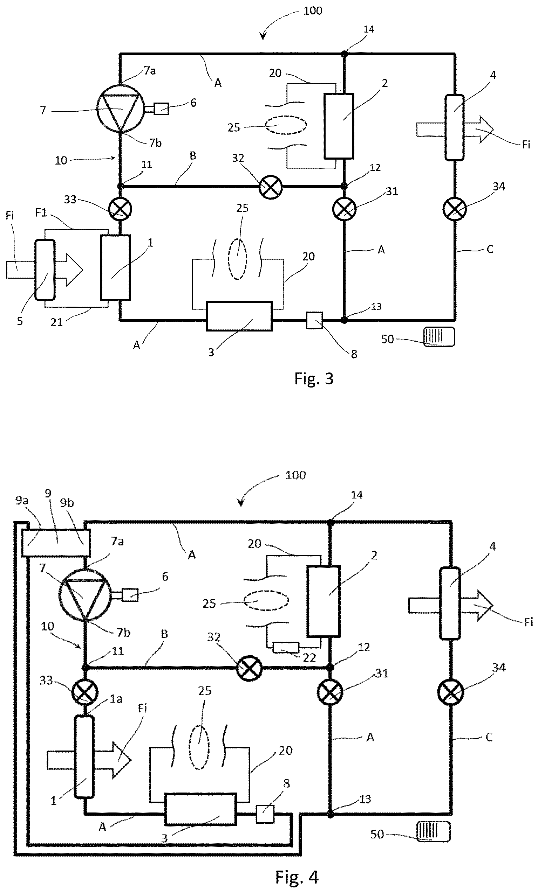

La figure 3 illustre une variante du mode de réalisation de la figure 2. Dans cette variante, le fluide caloporteur F1 est un liquide caloporteur configuré pour circuler dans un cinquième échangeur de chaleur 5 configuré pour échanger de la chaleur avec un flux d'air intérieur Fi à l'habitacle du véhicule.

Le cinquième échangeur de chaleur 5 est disposé sur un deuxième circuit de liquide caloporteur 21. Le chauffage de l'habitacle est réalisé de manière indirecte, puisque la chaleur de condensation du fluide réfrigérant est d'abord transférée au liquide caloporteur du circuit 21, puis la chaleur du liquide caloporteur est transférée au flux d'air intérieur Fi au niveau du cinquième échangeur 5. Une pompe, non représentée, peut faire circuler le liquide caloporteur dans le circuit 21. Le rôle des autres échangeurs est le même que dans le premier mode de réalisation de la figure 2. Le circuit de liquide caloporteur 21 pour le chauffage habitacle et le circuit de liquide caloporteur 20 pour le couplage thermique avec l'élément 25 de la chaine de transmission sont disjoints, c'est-à-dire qu'ils ne communiquent pas.

Sur le deuxième mode de réalisation ainsi que sur ses variantes, le circuit 10 de fluide réfrigérant comprend une deuxième branche de dérivation C disposée en parallèle du premier détendeur 31 et du deuxième échangeur de chaleur 2, la deuxième branche de dérivation C comprenant un quatrième détendeur 34 et un quatrième échangeur de chaleur 4.

La deuxième branche de dérivation C relie fluidiquement un troisième point de raccordement 13 disposé sur la boucle principale A en aval du troisième échangeur 3 et en amont du premier détendeur 31 à un quatrième point de raccordement 14 disposé sur la boucle principale A en aval du deuxième échangeur 2 et en amont du compresseur 7. La deuxième branche de dérivation C comporte un quatrième dispositif de détente 34 disposé en amont du quatrième échangeur 4 de chaleur.

Le quatrième échangeur 4 de chaleur est configuré pour échanger de la chaleur avec un flux d'air Fi intérieur à l'habitacle du véhicule. Le quatrième échangeur 4 de chaleur est disposé dans l'installation de chauffage, ventilation et/ou climatisation.

Dans le mode de réalisation de figure 1 ainsi que dans le mode de réalisation des figures 2 et 4, où le premier échangeur 1 est disposé dans l'installation de chauffage, ventilation et/ou climatisation, le premier échangeur 1 est disposé en aval du quatrième échangeur 4 selon un sens d'écoulement du flux d'air intérieur Fi. Dans la variante illustrée à la figure 3, le cinquième échangeur 5 est disposé en aval du quatrième échangeur 4 dans l'installation de chauffage, ventilation et/ou climatisation. Le quatrième échangeur 4 permet d'assurer le refroidissement de l'habitacle afin de maintenir le confort thermique des occupants du véhicule par ambiance chaude.

La figure 4 représente une autre variante du mode de réalisation du système de conditionnement thermique 100 de la figure 2. La boucle principale A de fluide réfrigérant comprend un échangeur interne 9 configuré pour permettre un échange de chaleur entre le fluide réfrigérant à haute pression en aval du troisième échangeur de chaleur 3 et en amont du premier détendeur 31, et le fluide réfrigérant à basse pression en aval du deuxième échangeur 2 et en amont du compresseur 7.

L'échangeur de chaleur interne 9 comportant une première section d'échange thermique 9a disposée en aval du dispositif d'accumulation 8 de fluide réfrigérant et amont du premier dispositif de détente 31, et une deuxième section d'échange thermique 9b disposée en aval du deuxième échangeur de chaleur 2. Un échange de chaleur est réalisé entre le fluide réfrigérant dans la première section d'échange thermique 9a et le fluide réfrigérant dans la deuxième section d'échange thermique 9b. L'échangeur interne 9 permet d'améliorer les performances du système de conditionnement thermique 100.

Selon une autre variante non représentée, la boucle principale A de fluide réfrigérant peut comporter un échangeur de sous-refroidissement disposé en aval du dispositif d'accumulation 8 et en amont du premier détendeur 31. L'échangeur de sous-refroidissement permet d'augmenter la puissance thermique de refroidissement, lorsque le système de conditionnement thermique est utilisé en mode refroidissement.

## Revendications

1. Procédé de contrôle d'un système de conditionnement thermique (100), le système de conditionnement thermique (100) comprenant:

     - un circuit (20) de liquide caloporteur configuré pour faire circuler un liquide caloporteur,
     - un circuit de fluide réfrigérant (10) comportant :

          -- une boucle principale (A) comprenant successivement selon un sens d'écoulement du fluide réfrigérant:

               --- un compresseur (7) configuré pour être entrainé par un moteur électrique (6), le compresseur (7) étant configuré pour faire passer le fluide réfrigérant d'une pression d'aspiration (Pr_s) à une pression de refoulement (Pr_d),
               --- un premier échangeur (1) de chaleur configuré pour fournir une puissance thermique (Pw1) à un fluide caloporteur (F1),
               --- un premier détendeur (31),
               --- un deuxième échangeur (2) de chaleur agencé conjointement sur le circuit de fluide réfrigérant (10) et sur le circuit de liquide caloporteur (20) de façon à recevoir une puissance thermique (Pw2) du liquide caloporteur,

          -- une première branche de dérivation (B) permettant au fluide réfrigérant en sortie du compresseur (7) de rejoindre le deuxième échangeur (2) en contournant le premier échangeur (1) et le premier détendeur (31), la première branche de dérivation (B) comprenant un deuxième détendeur (32),

     le procédé de contrôle comportant les étapes :

          (i) Recevoir une consigne de puissance thermique (C_Pw) à fournir au moins au fluide caloporteur (F1) au niveau du premier échangeur (1),

(ii) Déterminer une consigne de puissance électrique (C_Pw_el) à fournir au moteur électrique (6) du compresseur (7) en fonction de la consigne reçue de puissance thermique à fournir (C_Pw) et en fonction de la puissance thermique (Pw2) reçue par le deuxième échangeur (2),

(iii) Déterminer une consigne de pression de refoulement (C_Pr_d) en fonction de la consigne de puissance électrique (C_Pw_el) déterminée et en fonction d'une pression maximale de refoulement (Pr_d_max),

(iv) Déterminer une consigne de pression d'aspiration (C_Pr_s) en fonction de la consigne de puissance électrique (C_Pw_el) déterminée et en fonction de la consigne de pression de refoulement (C_Pr_d) déterminée,

(v) Contrôler le régime de rotation (N) du moteur électrique (6) du compresseur (7) de façon à ce que la puissance électrique fournie au compresseur (7) soit égale à la consigne (C_Pw_el) déterminée,

(vi) Contrôler une section de passage du deuxième détendeur (32) pour que la pression d'aspiration (Ps) du compresseur (7) soit égale à la consigne de pression d'aspiration (C_Pr_s) déterminée, et

(vii) Contrôler une section de passage du premier détendeur (31) pour que le fluide réfrigérant en entrée du compresseur (7) soit à l'état de vapeur surchauffée.

2. Procédé selon la revendication 1, dans lequel la boucle principale (A) du circuit de fluide réfrigérant (10) comprend un troisième détendeur (33) agencé en aval du compresseur (7) et en amont du premier échangeur de chaleur (1), le procédé comprenant l'étape :

(viii) Contrôler une section de passage du fluide réfrigérant dans le troisième détendeur (33) de façon à ce que la pression de refoulement (Pr_d) soit égale à la consigne de pression de refoulement (C_Pr_d).

3. Procédé selon la revendication 1 ou 2, comprenant les étapes :

(vii1) Déterminer une surchauffe (Sh) du fluide réfrigérant en entrée du compresseur (7),
(vii2) Contrôler une section de passage du premier détendeur (31) de façon à ce que la surchauffe (Sh) du fluide réfrigérant en entrée du compresseur (7) soit égale à une valeur de consigne (C_Sh).

4. Procédé selon la revendication 1 ou 2, comprenant les étapes :

(vii1') Déterminer une surchauffe (Dsh) du fluide réfrigérant en sortie du compresseur (7),
(vii2') Contrôler une section de passage du premier détendeur (31) de façon à ce que la surchauffe du fluide réfrigérant en sortie du compresseur (7) soit égale à une valeur de consigne (C_Dsh).

5. Procédé selon l'une des revendications précédentes, dans lequel la boucle principale (A) du système de conditionnement thermique (100) comprend, en aval du premier échangeur (1) de chaleur et en amont du premier dispositif de détente (31), un troisième échangeur de chaleur (3) agencé conjointement sur le circuit de fluide réfrigérant (10) et sur le circuit (20) de liquide caloporteur de façon à permettre un échange de chaleur entre le fluide réfrigérant et le liquide caloporteur, le troisième échangeur (3) de chaleur étant configuré pour fournir une puissance thermique (Pw3) au liquide caloporteur, et dans lequel à l'étape (i),

la consigne de puissance thermique (Pw) à fournir est une puissance thermique totale (Pw_tot), somme de la puissance thermique (Pw1) à fournir au fluide caloporteur (F1) au niveau du premier échangeur (1) et de la puissance thermique (Pw3) à fournir au liquide caloporteur au niveau du troisième échangeur (3).

6. Procédé selon l'une des revendications 1 à 5, dans lequel le fluide caloporteur (F1) est un flux d'air intérieur (Fi) à un habitacle d'un véhicule automobile.

7. Procédé selon l'une des revendications 1 à 5, dans lequel le fluide caloporteur (F1) est un liquide caloporteur configuré pour circuler dans un cinquième échangeur de chaleur (5) configuré pour échanger de la chaleur avec un flux d'air intérieur (Fi) à l'habitacle du véhicule.

8. Procédé selon l'une des revendications précédentes, dans lequel le deuxième échangeur de chaleur (2) est couplé thermiquement avec un élément (25) d'une chaine de traction du véhicule, par l'intermédiaire du liquide caloporteur du circuit de liquide caloporteur (20).

9. Procédé selon l'une des revendications précédentes en combinaison avec la revendication 5, dans lequel le troisième échangeur de chaleur (3) est couplé thermiquement à l'élément (25) d'une chaine de traction du véhicule, par l'intermédiaire du liquide caloporteur du circuit de liquide caloporteur (20).

10. Système de conditionnement thermique (100) comprenant:

- un circuit (20) de liquide caloporteur configuré pour faire circuler un liquide caloporteur,
- un circuit de fluide réfrigérant (10) comportant :

-- une boucle principale (A) comprenant successivement selon un sens d'écoulement du fluide réfrigérant:

--- un compresseur (7) configuré pour être entrainé par un moteur électrique (6), le compresseur (7) étant configuré pour faire passer le fluide réfrigérant d'une pression d'aspiration (Ps) à une pression de refoulement (Pd),
--- un premier échangeur (1) de chaleur configuré pour fournir une puissance thermique (Pw1) à un fluide caloporteur (F1),
--- un premier détendeur (31),
--- un deuxième échangeur de chaleur (2) agencé conjointement sur le circuit de fluide réfrigérant (10) et sur le circuit de liquide caloporteur (20) de façon à recevoir une puissance thermique (Pw2) du liquide caloporteur,

-- une première branche de dérivation (B) permettant au fluide réfrigérant en sortie du compresseur (7) de rejoindre le deuxième échangeur (2) en contournant le premier échangeur (1) et le premier détendeur (31), la première branche de dérivation (B) comprenant un deuxième détendeur (32),

- Une unité électronique de contrôle (50) configurée pour mettre en œuvre le procédé de contrôle selon l'une des revendications précédentes.

11. Système de conditionnement thermique (100) selon la revendication précédente, dans lequel le circuit (10) de fluide réfrigérant comprend une deuxième branche de dérivation (C) disposée en parallèle du premier détendeur (31) et du deuxième échangeur de chaleur (2), la deuxième branche de dérivation (C) comprenant un quatrième détendeur (34) et un quatrième échangeur de chaleur (4), et dans lequel le quatrième échangeur (4) de chaleur est configuré pour échanger de la chaleur avec un flux d'air (Fi) intérieur à l'habitacle du véhicule.

12. Système de conditionnement thermique (100) selon la revendication 10 ou 11, dans lequel la boucle principale (A) de fluide réfrigérant comprend un dispositif d'accumulation (8) de fluide réfrigérant disposé en aval du premier échangeur (1) et en amont du premier détendeur (31).

**Patentansprüche**

1. Verfahren zum Steuern eines thermischen Konditionierungssystems (100), wobei das thermische Konditionierungssystem (100) umfasst:

- einen Wärmeübertragungsflüssigkeitskreislauf (20), der zum Zirkulieren einer Wärmeübertragungsflüssigkeit konfiguriert ist,
- einen Kältemittelflüssigkeitskreislauf (10) mit:

-- einem Hauptkreislauf (A), der in Strömungsrichtung der Kältemittelflüssigkeit nacheinander umfasst:

--- einen Kompressor (7), der so konfiguriert ist, dass er von einem Elektromotor (6) angetrieben wird, wobei der Kompressor (7) so konfiguriert ist, dass er die Kältemittelflüssigkeit von einem Ansaugdruck (Pr_s) auf einen Förderdruck (Pr_d) bringt,
--- einen ersten Wärmetauscher (1), der so konfiguriert ist, dass er eine Wärmeleistung (Pw1) an eine Wärmeübertragungsflüssigkeit (F1) liefert,
--- ein erstes Expansionsventil (31),
--- einen zweiten Wärmetauscher (2), der gemeinsam am Kältemittelkreislauf (10) und am Wärmeübertragungsflüssigkeitskreislauf (20) angeordnet ist, um eine thermische Leistung (Pw2) von der Wärmeübertragungsflüssigkeit aufzunehmen,

-- einen ersten Bypasszweig (B), der es dem Kältemittelfluid am Ausgang des Kompressors (7) ermöglicht, den zweiten Wärmetauscher (2) unter Umgehung des ersten Wärmetauschers (1) und des ersten Expansionsventils (31) zu erreichen, wobei der erste Bypasszweig (B) ein zweites Expansionsventil (32) aufweist,

wobei das Steuerungsverfahren die folgenden Schritte umfasst:

(i) Empfangen eines Sollwerts für die thermische Leistung (C_Pw), die zumindest der Wärmeübertragungsflüssigkeit (F1) am ersten Wärmetauscher (1) zugeführt werden soll,
(ii) Bestimmen eines elektrischen Leistungssollwerts (C_Pw_el) für die elektrische Leistung, die dem Elektromotor (6) des Kompressors (7) zugeführt werden soll, auf der Grundlage des empfangenen thermischen Leistungssollwerts (C_Pw) für die zuzuführende thermische Leistung und auf der Grundlage der vom zweiten Wärmetauscher (2) empfangenen thermischen Leistung (Pw2),

(iii) Bestimmen eines Förderdrucksollwerts (C_Pr_d) auf der Grundlage des bestimmten elektrischen Leistungssollwerts (C_Pw_el) und auf der Grundlage eines maximalen Förderdrucks (Pr_d_max),

(iv) Bestimmen eines Ansaugdrucksollwerts (C_Pr_s) auf der Grundlage des bestimmten elektrischen Leistungssollwerts (C_Pw_el) und auf der Grundlage des bestimmten Förderdrucksollwerts (C_Pr_d),

(v) Steuern der Drehzahl (N) des Elektromotors (6) des Kompressors (7) derart, dass die dem Kompressor (7) zugeführte elektrische Leistung dem ermittelten Sollwert (C_Pw_el) entspricht,

(vi) Steuern eines Durchlassquerschnitts des zweiten Expansionsventils (32) derart, dass der Ansaugdruck (Ps) des Kompressors (7) gleich dem ermittelten Ansaugdruck-Sollwert (C_Pr_s) ist, und

(vii) Steuern eines Durchlassquerschnitts des ersten Expansionsventils (31) derart, dass sich das Kältemittelfluid am Einlass des Kompressors (7) im überhitzten Dampfzustand befindet.

2. Verfahren nach Anspruch 1, wobei der Hauptkreislauf (A) des Kältemittelkreislaufs (10) ein drittes Expansionsventil (33) umfasst, das stromabwärts des Kompressors (7) und stromaufwärts des ersten Wärmetauschers (1) angeordnet ist, wobei das Verfahren den folgenden Schritt umfasst:

(viii) Steuern eines Durchflussquerschnitts für das Kältemittel in dem dritten Expansionsventil (33), so dass der Förderdruck (Pr_d) gleich dem Förderdruck-Sollwert (C_Pr_d) ist.

3. Verfahren nach Anspruch 1 oder 2, das die folgenden Schritte umfasst:

(vii1) Bestimmen einer Überhitzung (Sh) des Kältemittelfluids am Einlass des Kompressors (7),

(vii2) Steuern eines Durchflussquerschnitts des ersten Expansionsventils (31) derart, dass die Überhitzung (Sh) des Kältemittelfluids am Einlass des Kompressors (7) gleich einem Sollwert (C_Sh) ist.

4. Verfahren nach Anspruch 1 oder 2, umfassend die folgenden Schritte:

(vii1') Bestimmen einer Überhitzung (Dsh) des Kältemittelfluids am Auslass des Kompressors (7),

(vii2') Steuern eines Durchlassquerschnitts des ersten Expansionsventils (31) derart, dass die Überhitzung des Kältemittelfluids am Auslass des Kompressors (7) einem Sollwert (C_Dsh) entspricht.

5. Verfahren nach einem der vorstehenden Ansprüche, wobei der Hauptkreislauf (A) des Klimatisierungssystems (100) stromabwärts des ersten Wärmetauschers (1) und stromaufwärts der ersten Expansionsvorrichtung (31) umfasst einen dritten Wärmetauscher (3) umfasst, der gemeinsam am Kältemittelkreislauf (10) und am Wärmeübertragungsflüssigkeitskreislauf (20) angeordnet ist, um einen Wärmeaustausch zwischen dem Kältemittel und der Wärmeübertragungsflüssigkeit zu ermöglichen, wobei der dritte Wärmetauscher (3) so konfiguriert ist, dass er eine Wärmeleistung (Pw3) an die Wärmeübertragungsflüssigkeit liefert, und wobei in Schritt (i) der Sollwert (Pw) für die zuzuführende thermische Leistung eine Gesamtwärmeleistung (Pw_tot) ist, die sich aus der Summe der dem Wärmeübertragungsfluid (F1) am ersten Wärmetauscher (1) zuzuführenden thermischen Leistung (Pw1) und der dem Wärmeübertragungsfluid am dritten Wärmetauscher (3) zuzuführenden thermischen Leistung (Pw3) ergibt.

6. Verfahren nach einem der Ansprüche 1 bis 5, wobei die Wärmeübertragungsflüssigkeit (F1) ein interner Luftstrom (Fi) im Innenraum eines Kraftfahrzeugs ist.

7. Verfahren nach einem der Ansprüche 1 bis 5, wobei die Wärmeübertragungsflüssigkeit (F1) eine Wärmeübertragungsflüssigkeit ist, die so konfiguriert ist, dass sie in einem fünften Wärmetauscher (5) zirkuliert, der so konfiguriert ist, dass er Wärme mit einem Luftstrom (Fi) im Fahrzeuginnenraum austauscht.

8. Verfahren nach einem der vorstehenden Ansprüche, wobei der zweite Wärmetauscher (2) über die Wärmeübertragungsflüssigkeit im Wärmeübertragungsflüssigkeitskreislauf (20) thermisch mit einem Element (25) eines Antriebsstrangs des Fahrzeugs gekoppelt ist.

9. Verfahren nach einem der vorstehenden Ansprüche in Kombination mit Anspruch 5, wobei der dritte Wärmetauscher (3) über die Wärmeübertragungsflüssigkeit im Wärmeübertragungsflüssigkeitskreislauf (20) thermisch mit dem Element (25) eines Antriebsstrangs des Fahrzeugs gekoppelt ist.

10. Thermisches Konditionierungssystem (100), umfassend:

- einen Wärmeübertragungsflüssigkeitskreislauf (20), der zum Zirkulieren einer Wärmeübertragungsflüssigkeit konfiguriert ist,
- einen Kältemittelfluidkreislauf (10) mit:

-- einem Hauptkreislauf (A), der in Strömungsrichtung des Kältemittelfluids nacheinander umfasst:

--- einen Kompressor (7), der so konfiguriert ist, dass er von einem Elektromotor (6) angetrieben wird, wobei der Kompressor (7) so konfiguriert ist, dass er die Kältemittelflüssigkeit von einem Ansaugdruck (Ps) auf einen Förderdruck (Pd) bringt,
--- einen ersten Wärmetauscher (1), der so konfiguriert ist, dass er eine Wärmeleistung (Pw1) an eine Wärmeübertragungsflüssigkeit (F1) liefert,
--- ein erstes Expansionsventil (31),
--- einen zweiten Wärmetauscher (2), der gemeinsam am Kältemittelkreislauf (10) und am Wärmeübertragungsflüssigkeitskreislauf (20) angeordnet ist, um eine thermische Leistung (Pw2) von der Wärmeübertragungsflüssigkeit aufzunehmen,

-- einen ersten Bypasszweig (B), der es dem Kältemittelfluid am Ausgang des Kompressors (7) ermöglicht, den zweiten Wärmetauscher (2) unter Umgehung des ersten Wärmetauschers (1) und des ersten Expansionsventils (31) zu erreichen, wobei der erste Bypasszweig (B) ein zweites Expansionsventil (32) umfasst,

- eine elektronische Steuereinheit (50), die so konfiguriert ist, dass sie das in einem der vorstehenden Ansprüche beanspruchte Steuerungsverfahren implementiert.

**11.** Das thermische Konditionierungssystem (100) nach dem vorstehenden Anspruch, wobei der Kältemittelfluidkreislauf (10) einen zweiten Bypasszweig (C) umfasst, der parallel zum ersten Expansionsventil (31) und zum zweiten Wärmetauscher (2) angeordnet ist, wobei der zweite Bypasszweig (C) ein viertes Expansionsventil (34) und einen vierten Wärmetauscher (4) umfasst, und wobei der vierte Wärmetauscher (4) so konfiguriert ist, dass er Wärme mit einem Luftstrom (Fi) im Fahrzeuginnenraum austauscht.

**12.** Das Klimatisierungssystem (100) gemäß Anspruch 10 oder 11, wobei der Hauptkreislauf (A) für das Kältemittelfluid eine Kältemittelfluid-Sammelvorrichtung (8) umfasst, die stromabwärts vom ersten Wärmetauscher (1) und stromaufwärts vom ersten Expansionsventil (31) angeordnet ist.

**Claims**

**1.** A method for controlling a thermal conditioning system (100), the thermal conditioning system (100) comprising:

- a heat transfer liquid circuit (20) configured to circulate a heat transfer liquid,
- a refrigerant fluid circuit (10) having:

-- a main loop (A) comprising, in succession in the direction of flow of the refrigerant fluid:

--- a compressor (7) configured to be driven by an electric motor (6), the compressor (7) being configured to bring the refrigerant fluid from an intake pressure (Pr_s) to a delivery pressure (Pr_d),
--- a first heat exchanger (1) configured to supply a thermal power (Pw1) to a heat transfer fluid (F1),
--- a first expansion valve (31),
--- a second heat exchanger (2) arranged conjointly on the refrigerant fluid circuit (10) and on the heat transfer liquid circuit (20) so as to receive a thermal power (Pw2) from the heat transfer liquid,

-- a first bypass branch (B) allowing the refrigerant fluid at the outlet of the compressor (7) to reach the second exchanger (2) by bypassing the first exchanger (1) and the first expansion valve (31), the first bypass branch (B) having a second expansion valve (32),

the control method comprising the following steps:

(i) receiving a thermal power setpoint (C_Pw) for thermal power to be supplied at least to the heat transfer fluid (F1) at the first exchanger (1),
(ii) determining an electrical power setpoint (C_Pw_el) for electrical power to be supplied to the electric motor (6) of the compressor (7) on the basis of the received thermal power setpoint (C_Pw) for thermal power to be supplied and on the basis of the thermal power (Pw2) received by the second exchanger (2),
(iii) determining a delivery pressure setpoint (C_Pr_d) on the basis of the determined electrical power setpoint (C_Pw_el) and on the basis of a maximum delivery pressure (Pr_d_max),
(iv) determining an intake pressure setpoint (C_Pr_s) on the basis of the determined electrical power setpoint (C_Pw_el) and on the basis of the determined delivery pressure setpoint

(C_Pr_d),

(v) controlling the rotational speed (N) of the electric motor (6) of the compressor (7) such that the electrical power supplied to the compressor (7) is equal to the determined setpoint (C_Pw_el),

(vi) controlling a passage cross section of the second expansion valve (32) such that the intake pressure (Ps) of the compressor (7) is equal to the determined intake pressure setpoint (C_Pr_s), and

(vii) controlling a passage cross section of the first expansion valve (31) such that the refrigerant fluid at the inlet of the compressor (7) is in the superheated steam state.

2. The method as claimed in claim 1, wherein the main loop (A) of the refrigerant fluid circuit (10) comprises a third expansion valve (33) arranged downstream of the compressor (7) and upstream of the first heat exchanger (1), the method comprising the following step:

(viii) controlling a refrigerant fluid passage cross section in the third expansion valve (33) such that the delivery pressure (Pr_d) is equal to the delivery pressure setpoint (C_Pr_d).

3. The method as claimed in claim 1 or 2, comprising the following steps:

(vii1) determining a superheating (Sh) of the refrigerant fluid at the inlet of the compressor (7),
(vii2) controlling a passage cross section of the first expansion valve (31) such that the superheating (Sh) of the refrigerant fluid at the inlet of the compressor (7) is equal to a setpoint value (C_Sh).

4. The method as claimed in claim 1 or 2, comprising the following steps:

(vii1') determining a superheating (Dsh) of the refrigerant fluid at the outlet of the compressor (7),
(vii2') controlling a passage cross section of the first expansion valve (31) such that the superheating of the refrigerant fluid at the outlet of the compressor (7) is equal to a setpoint value (C_Dsh).

5. The method as claimed in one of the preceding claims, wherein the main loop (A) of the thermal conditioning system (100) comprises, downstream of the first heat exchanger (1) and upstream of the first expansion device (31), a third heat exchanger (3) arranged conjointly on the refrigerant fluid circuit (10) and on the heat transfer liquid circuit (20) so as to enable an exchange of heat between the refrigerant fluid and the heat transfer liquid, the third heat exchanger (3) being configured to supply a thermal power (Pw3) to the heat transfer liquid, and wherein, in step (i),

the thermal power setpoint (Pw) for thermal power to be supplied is a total thermal power (Pw_tot), which is the sum of the thermal power (Pw1) to be supplied to the heat transfer fluid (F1) at the first exchanger (1) and the thermal power (Pw3) to be supplied to the heat transfer liquid at the third exchanger (3).

6. The method as claimed in one of claims 1 to 5, wherein the heat transfer fluid (F1) is an internal air stream (Fi) inside a motor vehicle interior.

7. The method as claimed in one of claims 1 to 5, wherein the heat transfer fluid (F1) is a heat transfer liquid configured to circulate in a fifth heat exchanger (5) configured to exchange heat with an air stream (Fi) inside the vehicle interior.

8. The method as claimed in one of the preceding claims, wherein the second heat exchanger (2) is thermally coupled to an element (25) of a drive train of the vehicle, via the heat transfer liquid in the heat transfer liquid circuit (20).

9. The method as claimed in one of the preceding claims in combination with claim 5, wherein the third heat exchanger (3) is thermally coupled to the element (25) of a drive train of the vehicle, via the heat transfer liquid in the heat transfer liquid circuit (20).

10. A thermal conditioning system (100) comprising:

- a heat transfer liquid circuit (20) configured to circulate a heat transfer liquid,
- a refrigerant fluid circuit (10) having:

-- a main loop (A) comprising, in succession in the direction of flow of the refrigerant fluid:

--- a compressor (7) configured to be driven by an electric motor (6), the compressor (7) being configured to bring the refrigerant fluid from an intake pressure (Ps) to a delivery pressure (Pd),
--- a first heat exchanger (1) configured to supply a thermal power (Pw1) to a heat transfer fluid (F1),
--- a first expansion valve (31),
--- a second heat exchanger (2) arranged conjointly on the refrigerant fluid circuit (10) and on the heat transfer liquid circuit (20) so as to receive a thermal power (Pw2) from the heat transfer liquid,

-- a first bypass branch (B) allowing the refrigerant fluid at the outlet of the compressor (7) to reach the second exchanger (2) by bypassing the first exchanger (1) and the first expansion valve (31), the first bypass branch (B) comprising a second expansion valve (32),

- an electronic control unit (50) configured to implement the control method as claimed in one of the preceding claims.

11. The thermal conditioning system (100) as claimed in the preceding claim, wherein the refrigerant fluid circuit (10) comprises a second bypass branch (C) disposed in parallel with the first expansion valve (31) and the second heat exchanger (2), the second bypass branch (C) comprising a fourth expansion valve (34) and a fourth heat exchanger (4), and wherein the fourth heat exchanger (4) is configured to exchange heat with an air stream (Fi) inside the vehicle interior.

12. The thermal conditioning system (100) as claimed in claim 10 or 11, wherein the main loop (A) of refrigerant fluid comprises a refrigerant fluid accumulation device (8) disposed downstream of the first exchanger (1) and upstream of the first expansion valve (31).

Fig. 1

Fig. 2

Fig. 3

Fig. 4

Fig.5

Fig. 6

Fig. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017065931 A1